# EUROPEAN PATENT APPLICATION

(11) **EP 1 868 296 A1**
(43) Date of publication of application: **19.12.2007**
(21) Application number: 06012345.2
(22) Date of filing: 15.06.2006
(51) Int. Cl.: H04B 1/38

(54) **Radio broadcast transceiver**

(71) Applicant: Semiconductor Ideas to The Market (ItoM) BV, 4389 AH Breda (NL)
(72) Inventor: Heijnen, Antonius Ludivicus Johannes Cornelis, 4702 KJ Roosendaal (NL)
(74) Representative: Van Straaten, Joop

(57) **Abstract**

Transceiver comprising a low power RF radio broadcast transmitter having means to modulate a transmitter carrier frequency with a baseband modulation signal as well as transmitter tuning means to vary said transmitter carrier frequency within an RF radio broadcast band. To secure that operation of said transmitter means will not cause interference to broadcast reception, said transceiver includes an RF radio broadcast receiver having a search tuning circuit being provided with channel selecting means for, in a receiving mode of the transceiver, detecting a free RF radio broadcast channel within said RF radio broadcast band carrying no RF signal exceeding a predetermined threshold level, said channel selecting means supplying tuning data defining said free RF radio broadcast channel to means for transmitting said tuning data to said transmitter tuning means for tuning said transmitter carrier frequency to said free RF radio broadcast channel in a transmitting mode of the transceiver.

## Description

The invention relates to a transceiver comprising a low power RF radio broadcast transmitter having means to modulate a transmitter carrier frequency with a baseband modulation signal as well as transmitter tuning means to vary said transmitter carrier frequency within an RF radio broadcast band,. Such transmitter means is on itself known, e.g. from Ramsey Electronics publication No. MFM 10A Revision G, first printing August 1994, relating to FM Kit Instruction Manual of FM Stereo Transmitter Ramsey Electronics Model No. FM10A.

The known transmitter means is designed for short range transmission of local audio programs via an RF radio broadcast channel within the 88-108 MHz FM band and meant to be used as e.g. a wireless extension of home audio systems, listening aid for local auditorium, for churches, schools, shops and shopping malls, short-range, two-channel experiments and demonstrations.

Low power transmission of personal programs within the RF FM radio broadcast range from 88 to 108 MHz, should comply with Part 15 of FCC regulations, in that such transmissions do not disturb broadcast reception of regular FM radio stations. This means that channels coinciding with channels of regular FM radio stations, which can be received by others within the reception range of said transmitter means, are excluded from being used for such low power transmissions. This strongly limits the number of RF radio broadcast channels which can be used for such transmissions, such channels also being referred to as "free", "empty", "open" or "unused" RF radio broadcast channels and complicates the finding thereof.

After having found a suitable free channel in the 88-108 MHz FM band, tuning of said known transmitter means requires manual adjustment with a plastic alignment screwdriver while listening for a reduction in the normal background noise.

This, in addition to the RF signal strength varying strongly with motion, limits the known transmitter means to stationary use only.

Now, therefore, it is an object of the invention to provide a transceiver with automatic free channel selection allowing for stationary as well as portable use, and suitable for operation in a small range personal mobile broadcasting system.

These objects are achieved in a transceiver as described in the opening paragraph according to the invention, which is characterized in that said transceiver includes an RF radio broadcast receiver having a search tuning circuit being provided with channel selecting means for, in a receiving mode of the transceiver, detecting a free RF radio broadcast channel within said RF radio broadcast band carrying no RF signal exceeding a predetermined threshold level, said channel selecting means supplying tuning data defining said free RF radio broadcast channel to said transmitter tuning means for tuning said transmitter carrier frequency to said free RF radio broadcast channel in a transmitting mode of the transceiver.

By applying the invention, the search tuning circuit is used to scan the RF radio broadcast band and to detect locally free RF radio broadcast channels, i.e. RF radio broadcast channels carrying no RF signal exceeding a predetermined threshold level. Said predetermined threshold level is chosen such that the detected RF radio broadcast channels are most certainly free of any useful broadcast signal at the time and place of occurrence. The channel selecting means are used to select one out of said detected locally free RF radio broadcast channels and allows for applying further selection criteria e.g. to choose the free RF radio broadcast channel with minimum signal strength and/or with maximum permanency in lacking RF signals exceeding said predetermined threshold level amongst those detected. The frequency location or tuning data of said selected one free RF radio broadcast channel is used to tune the transmitting frequency to said one selected free RF radio broadcast channel, therewith securing broadcast transmission of the baseband modulation signal without interfering other (public) broadcast transmissions.

For cooperation of a transceiver in a transmitting mode with any other receiver, including conventional receivers or other transceivers according to the invention, operating in a receiving mode, said free RF radio broadcast channel is preferably being chosen within a cluster of frequency adjacent RF radio broadcast channels carrying no RF signal exceeding said predetermined threshold level having at least one lower and one higher frequency adjacent channel within said cluster.

An embodiment of a transceiver according to the invention, selecting a free RF radio broadcast channel with minimum RF signal strength and maximum permanency in lacking RF signals exceeding said predetermined threshold level amongst those detected in the search tuning circuit, is characterized in that detected RF radio broadcast channels having at least one lower and one higher frequency adjacent channel within a plurality of clusters are mutually compared with respect to their RF signal strengths, said free channel being chosen to correspond to an RF radio broadcast channel having minimum RF signal strength.

An embodiment of a transceiver according to the invention is characterized by means for converting said tuning data into an optical tuning signal as well as display means to display said optical tuning signal. This allows any person carrying a receiver within visible range of said transceiver according to the invention to set the tuning of his receiver at said free RF radio broadcast channel to prepare for receiving the program signal transmitted from said transceiver. Such receiver may be any type of broadcast receiver, including conventional broadcast radio receivers as well as transceivers according to the invention.

An embodiment of a transceiver according to the invention is characterized by said low power RF radio broadcast transmitter comprising a digital modulator to modulate an auxiliary data carrier within said baseband modulation signal with a digital program service name indicating the transmission of a personal broadcast program. This allows the user of a receiver within reception range of said transceiver to quickly identify while scanning the FM broadcast range the free RF radio broadcast channel used by said transceiver for transmission of a personal program signal to such receiver.

Another embodiment of a transceiver according to the invention is characterized by a continuous update and storage of tuning data of N free channels within said RF radio broadcast band as well as means to convert said tuning data in an RDS tuning data list comprising N alternative frequencies indicative for said N free channels. The specification for RDS is described in European Standard CENELEC EN 50 067 (April 1992), "Specification of the radio data system" and a US variant thereof, known as RBDS, is specified in NRSC United States RBDS Standard Jan. 8, 1993, "Specification of the radio broadcast data system". Both RDS systems provide for an auxiliary RDS data carrier to be used for transmitting tuning data signals of alternative frequencies (AFs) to an RDS receiver, as also being disclosed in US patent 6,163,711 incorporated herein by reference.

By applying this measure, a receiver within reception range of said transceiver may continuously be updated on the alternative frequencies, which the transceiver may use to transmit said personal broadcast signal, once the initially free channel becomes unusable. This considerably shortens the time to find the next free channel amongst the N alternative frequencies upon any tuning switch of the transceiver.

For quick auditive recognition of the free channel while scanning through the RF FM broadcast band with a receiver within reception range of the transceiver according to the invention, said baseband modulation signal preferably comprises a free channel identifying tone signal occurring for a predetermined period after start of transmission of said baseband modulation signal.

In such transceiver, a search tuning trigger signal may be used to initiate said search tuning circuit to search for another free RF radio broadcast channel within said RF radio broadcast band, said channel selecting means supplying tuning data defining said other free RF radio broadcast channel to said transmitter tuning means for tuning said transmitter carrier frequency to said other free RF radio broadcast channel.

These and further aspects and advantages of the invention will be discussed more in detail hereinafter with reference to the disclosure of preferred embodiments, and in particular with reference to the appended Figures, in which well known circuits have been shown in block diagram form in order not to obscure the present invention in unnecessary detail and like or similar elements are designated by the same reference numeral through the several views, wherein:
Figure 1 shows a first embodiment of a transceiver according to the invention;
Figure 2 shows a flow chart illustrating a method of searching an empty channel and dynamically monitoring such channel as well as alternative empty channels for a continuous tuning update executed in a microprocessor of a transceiver according to the invention;
Figure 3 shows an example of a field strength landscape of the FM broadcast band, which in practice may occur at a certain geographical location.

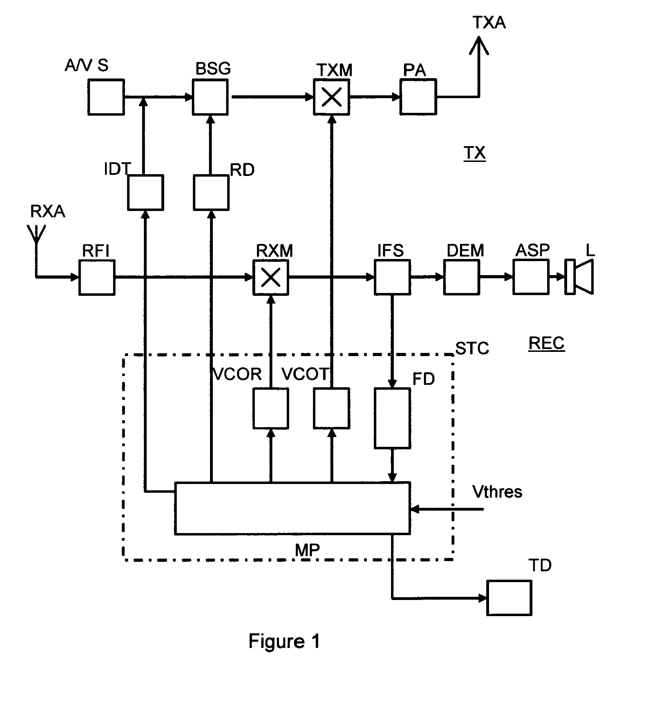

Figure 1 shows a transceiver comprising an FM radio broadcast receiver REC including an RF input stage RFI for selectively amplifying an RF channel signal within an RF FM radio broadcast band, supplied from receiver antenna means RXA. The RF input stage RFI is coupled to a receiver mixer stage RXM for converting said RF channel signal into an IF signal being selectively amplified in IF stage IFS. An output of the IF stage IFS is coupled to an FM demodulator DEM, for demodulating said IF signal into a baseband signal, which is further processed in audio signal processor ASP and reproduced in loudspeaker means L. The IF stage IFS is also coupled to a field strength detector FD for measuring the field strength of the channel selected by the IF stage, hereinafter also being referred to as received channel.

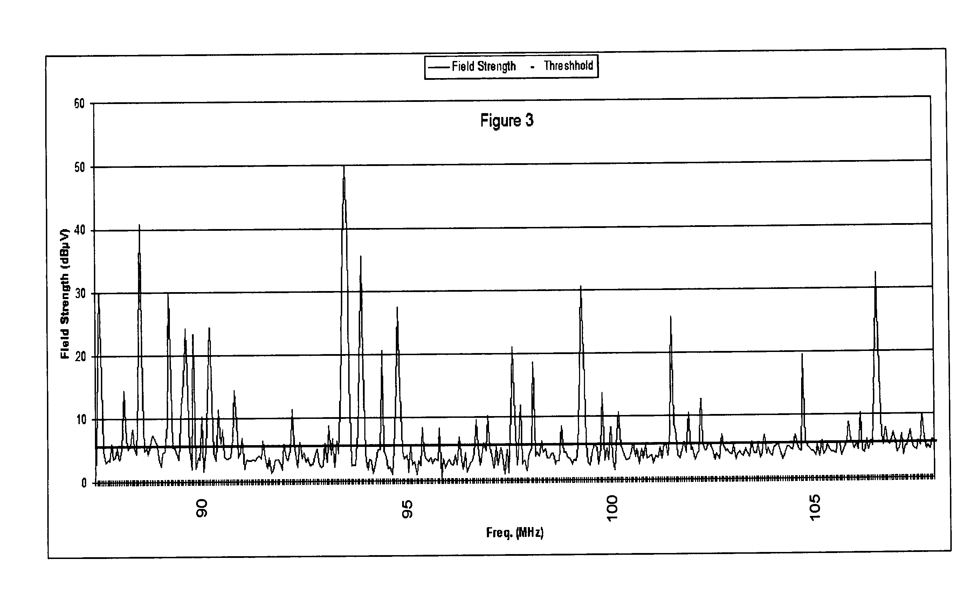

The receiver mixer stage RXM is being supplied with a local oscillator signal from a tunable local receiver oscillator VCOR. Said tunable receiver oscillator VCOR is part of a search tuning circuit STC, which also includes processor means MP. In a search mode, said processor means MP generates a tuning control signal to said tunable receiver oscillator VCOR for a monotonous stepwise increase or decrease of the receiver tuning frequency throughout the full range of said RF FM radio broadcast band. To effect a proper scanning of all channels receivable within said RF FM radio broadcast band, the frequency steps of the local receiver oscillator VCOR are chosen to correspond with the grid of the channel frequency raster of the FM radio broadcast band and the receiver tuning is fixed at each channel frequency for a short field strength measuring period. Within this measuring period, the channel signal field strength is being measured in field strength detector FD. The field strength variations of all frequency consecutive channels within said RF FM radio broadcast band is shown in Figure 3 and represent a field strength landscape, which strongly varies with motion and/or otherwise varying environmental conditions. The receiver described sofar is on itself known, e.g. from Sanyo's IC LV24xxx family.

Unlike the beforementioned known receiver, the channel selection procedure provided by the search tuning circuit STC and the field strength detector FD of the transceiver according to the invention in a receiving mode of the transceiver according to the invention, is not aimed at detecting channels exceeding in RF reception field strength a certain minimum value, but at the detection of channels having an RF reception field strength below a certain predetermined maximum threshold field strength value, Vthres, or put otherwise are carrying no RF signals exceeding Vthres. For this purpose the field strength detector FD supplies an RF reception field strength indicating signal to processor means MP, in which it is compared with said predetermined maximum threshold field strength value, Vthres, shown in Figure 3 with a horizontal line, which in a practical embodiment is chosen at approximately 5.5 dBµV. Any channel having an RF reception field strength below Vthres is being stored in a memory bank included in said processor means MP or directly used for transmission of personal audio and/or video programs as will be explained hereinafter. In practice Vthres may be chosen within a range from a minimum value below which no free channels are detected to a maximum value just below the minimum RF field strength of regular RF broadcast signals, which may be received by a sensitive receiver. This is to secure that the so detected channel is free to be used for transmitting personal programs without interfering regular broadcastings, such channels herein also being referred to as "empty" or "free" channels. The implementation of such free channel detection using a conventional field strength detector and properly programmed processor means MP lies within the normal ability of anyone skilled in the art and needs no further clarification.

According to the invention, one of the detected free channels is selected to be used in a transmitting mode of the transceiver according to the invention by a transmitter part TX of the transceiver for transmitting a personal audio and/or video signal from an audio and/or video signal source A/V S, which can be received by any conventional type FM broadcast receiver located within reception range from said transceiver, herein also being referred to as second receiver. In said transmitter part TX the audio and/or video signal source A/V S is coupled through a baseband signal generator BSG to a transmitter mixer stage TXM for FM modulating an RF transmission carrier signal having a frequency corresponding to the carrier signal of said one selected free channel with said personal audio and/or video program signal. The RF transmission carrier is being supplied to the transmitter mixer stage TXM from a tunable local transmitter oscillator VCOT. This tunable local transmitter oscillator VCOT is tuned at the frequency of the carrier signal of said selected free channel by the processor means MP supplying tuning data defining said free RF radio broadcast channel to said tunable local transmitter oscillator VCOT.

In practice the transmission power of the transmitter part TX of the transceiver is limited to keep reception of said personal audio and/or video signal within relatively short distance and to comply with the above transmission regulations. To indicate to the user of the second receiver the free channel in use by the transceiver for transmitting the personal audio and/or video program signal, the transceiver according to the invention may be provided with a display TD receiving from the processor means MP the tuning frequency of said free channel for an optical representation thereof. The user of the second receiver is therewith enabled to simply read said tuning frequency and manually tune the second receiver at the displayed tuning frequency allowing him to enjoy to said personal audio and/or video program.

If such display cannot be used, it is alternatively possible to generate and transmit a free channel identifying tone signal within the audible frequency range, which is included in the baseband modulation signal. This free channel identifying tone signal is generated in identifying tone signal generator IDT upon receiving a trigger signal supplied from the processor means MP and maintained during a limited period following said trigger signal, such period being predetermined or alternatively being controlled by the user of the transceiver. The trigger signal is initiated by the processor means MP upon selection of the free channel. The free channel identifying tone signal identifies to the user of the second receiver, who is scanning through the RF FM Broadcast band, the reception of said free channel, allowing him to manually fix the tuning of the second receiver thereto. This free channel identifying tone signal can also be used in the second receiver as a trigger signal for automatically fixing the tuning of this second receiver to said free channel while scanning through the RF FM broadcast band. The implementation of such feature lies within the normal ability of the skilled man and does not necessitate to be further amplified.

Another alternative method to identify the free channel in use by the transceiver to transmit the personal audio and/or video program signal requires the use of a second FM broadcast receiver which is capable to receive digital Radio Data System standard (RDS) signals. The specification for RDS, incorporated herein by reference, is described in European Standard CENELEC EN 50 067 (April 1992), "Specification of the radio data system", and in NRSC United States RBDS Standard Jan. 8, 1993, "Specification of the radio broadcast data system". In a practical embodiment of a transceiver according to the invention using this method, the transceiver comprises means RD to generate a digital RDS Program Service Name signal identifying the transmission of a personal audio and/or video program, upon receiving a trigger signal supplied from the processor means MP. This digital RDS Program Service Name maintained during the transmission of said personal audio and/or video program. The trigger signal is initiated by the processor means MP upon selection of the free channel. The digital RDS Program Service Name identifies to the user of the second receiver, when scanning through the RF FM Broadcast band, immediately recognizes from the displayed Program Service Name when the actually received signal is carrying the personal audio and/or video program being transmitted by a transceiver according to the invention and may stop manually the scanning procedure to fix the tuning of the receiver at the occurring tuning frequency to stabilize the reception of said personal broadcast program.

This digital RDS Program Service Name can also be used in the second receiver as a trigger signal for automatically fixing the tuning of this second receiver to said free channel while scanning through the RF FM broadcast band. The implementation of such feature lies within the normal ability of the skilled man and does not necessitate to be further amplified.

The digital RDS Program Service Name together with said personal audio and/or video program signal is being supplied to the baseband signal generator BSG providing a baseband composite signal including said personal audio and/or video program signal and modulated on an auxiliar RDS carrier said digital RDS Program Service Name. This baseband composite signal is being supplied to the transmitter mixer stage TXM for FM modulating the RF transmission carrier signal having a frequency corresponding to the carrier signal of the selected free channel. As mentioned above, the RF transmission carrier is being supplied to the transmitter mixer stage TXM from the tunable local transmitter oscillator VCOT, which is tuned to the frequency of the carrier signal of said selected free channel. Compliance with the standard RDS system in the transmission of said RDS Program Service Name secures full compatibility with conventional FM RDS broadcast receivers.

In practice, free channels may occur in clusters, i.e. within a series of frequency consecutive free channels. According to a preferable embodiment of a transceiver according to the invention, the search tuning circuit STC and in particular the processor means MP thereof selects a channel having at least one lower and one higher frequency adjacent channel within such cluster as free channel to be used for the transmission of the personal audio and/or video program.

In order to avoid selecting a free channel which quickly appears to be or to become in use by a regular broadcast program the free channel chosen should have minimum RF signal strength amongst those within said clusters having at least one lower and one higher frequency adjacent channel.

A transceiver according to the invention allowing for a continuous use of a free channel, i.e. a channel carrying no RF signals exceeding said certain predetermined maximum threshold field strength value, provides for a continuous update and storage of a number N of alternative free channels and a continuous switching over to one of the alternative free channels in case the RF signals of the channel currently in use exceed said certain predetermined maximum threshold field strength value. A list of said N alternative free channels may be included in the above baseband composite signal and transmitted from the transceiver to a conventional FM RDS broadcast receiver. The limited number of alternative frequencies speeds up the search for and synchronization in the second receiver to the changes in free channel selection in the transceiver.

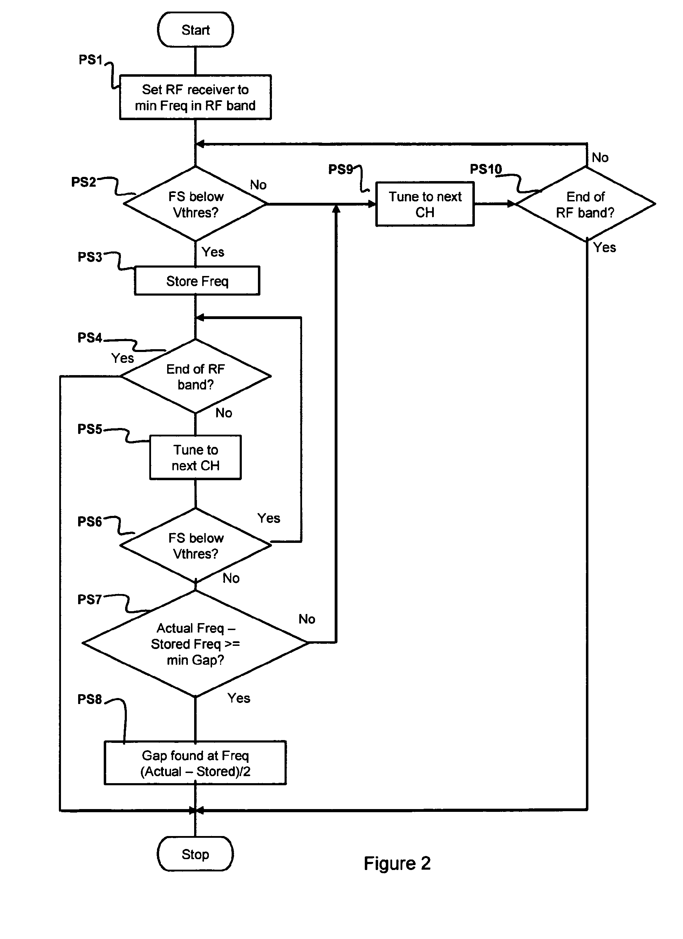

Figure 2 shows a flow chart illustrating the search of a first empty channel through Program Steps (PS) 1-3, PS9 and PS 10:
Following upon start of the program, the tuning of the FM radio broadcast receiver REC is being set in PS1 (Program Step 1) to a fixed default starting position, e.g. the frequency of the RF channel at the lower edge of the RF FM broadcast band ranging from 87.5-108 MHz. In PS2 the actual RF reception field strength (V) of this lowest RF channel is being measured by comparison with a predetermined minimum threshold field strength Vthres. If the actual RF reception field strength exceeds Vthres, then in PS 9 the FM radio broadcast receiver REC is being increased in its tuning frequency to receive the next RF channel within said RF FM broadcast band. If said next RF channel does not coincide with the upper edge of the RF FM broadcast band, which is being determined in PS 10, then the program recurs to PS2, in which the now actual RF reception field strength (V) of this next RF channel is being compared with said predetermined minimum threshold field strength Vthres. This loop will be followed until a first RF channel is found having an actual RF reception field strength below said predetermined minimum threshold field strength Vthres. This first RF channel is hereinafter being referred to as first free RF channel, the RF channel frequency thereof being stored in PS 3.

In PS 4-7, the frequency gap width following upon said first free channel having an RF reception field strength below said predetermined minimum threshold field strength Vthres, is being measured. PS 4 is to detect whether the upper edge of the RF FM broadcast band is reached. If not, then in PS 5 the FM radio broadcast receiver REC is being increased in its tuning frequency to receive the RF channel next to said first free RF channel. If this next RF channel also appears to be free or empty, i.e. the RF field strength of this next RF channel remains below said predetermined minimum threshold field strength Vthres, then again in PS 5 the FM radio broadcast receiver REC is being increased in its tuning frequency to receive the RF channel next to said last found empty RF channel, and so on, until either the upper edge of the RF FM broadcast band is reached or in PS 6 a subsequent RF channel appears to exceed said predetermined minimum threshold field strength Vthres, hereinafter being referred to as an occupied channel. In the latter case, the frequency gap between said first free RF channel and the occupied RF channel is being compared with a predetermined minimum gap threshold value in PS 7. If said frequency gap does not exceed said predetermined minimum gap threshold value, the preceding Program Steps 1-6, 9 and 10 are being repeated until the frequency gap between an Xth free channel and the first occupied exceeds said predetermined minimum gap threshold value. Then in PS 8, the FM radio broadcast receiver REC may be tuned to the RF frequency of said Xth free channel increased with the half value of the frequency gap between said Xth free channel and said occupied RF channel, in PS8 being indicated with Freq(actual-stored), hereinafter being referred to as Fa-s. Or, alternatively, the Fa-s value of said frequency gap may be stored and compared with other likewise determined Fa-s values of other frequency gaps exceeding said predetermined minimum gap threshold value. From the so obtained series of values (Fa-s)i with I = 1-N that value (Fa-s)x is chosen to be used for transmitting the personal audio and/or video program, that is received with minimum field strength, or that occurs within a frequency gap with maximum gap width.

In a practical implementation, said processor means MP includes an array of memory cells for storing therein signal values indicative of the RF signal strength on a plurality of RF FM radio broadcast channels within said RF FM radio broadcast band carrying no RF signal exceeding said predetermined threshold level Vthres, said array of memory cells having respective addresses indicative of the tuning data of said plurality of RF FM radio broadcast channels, said channel selector identifying clusters of frequency adjacent RF FM radio broadcast channels having signal values indicative of their RF signal strengths stored in said array of memory cells and selecting said free channel from one of the RF FM radio broadcast channels having at least on lower and one higher frequency adjacent channel within such cluster.

If the channel in use by the transceiver becomes unusable for whatever reason, the search tuning circuit STC may be initiated by a search trigger signal, whereupon said free channel detection and selection is repeated to find another free RF radio broadcast channel within said RF radio broadcast band carrying no RF signal exceeding a predetermined threshold level.

Said search trigger signal may be generated manually upon noticing deterioration of the signal received with the second receiver.

The implementation of the above features as such lie within the normal ability of anyone skilled in the art and does not need further amplification.

Now, the present invention has hereabove been disclosed with reference to preferred embodiments thereof. Persons skilled in the art will recognize that numerous modifications and changes may be made thereto without exceeding the scope of the appended Claims. One such modification is to make the predetermined threshold level dependent of the number of consecutive free channels detected during frequency scan. If no or only few single free channels are detected the predetermined threshold level may be increased to a value just below the minimum RF field strength of regular RF broadcast signals, which may be received by a sensitive receiver. Within clusters of 3 or more free channels preferably the one in or close to the center of the free frequency gap is chosen to be used for the transmission of the personal audio and/or video program.

The invention is embodied in each new characteristic and each combination of characteristics. Any reference signs do not limit the scope of the claims. The word "comprising" does not exclude the presence of other elements than those listed in a claim. Use of the word "a" or "an" preceding an element does not exclude the presence of a plurality of such elements.

## Claims

1. Transceiver comprising a low power RF radio broadcast transmitter having means to modulate a transmitter carrier frequency with a baseband modulation signal as well as transmitter tuning means to vary said transmitter carrier frequency within an RF radio broadcast band, **characterized in that** said transceiver includes an RF radio broadcast receiver having a search tuning circuit being provided with channel selecting means for, in a receiving mode of the transceiver, detecting a free RF radio broadcast channel within said RF radio broadcast band carrying no RF signal exceeding a predetermined threshold level, said channel selecting means supplying tuning data defining said free RF radio broadcast channel to said transmitter tuning means for tuning said transmitter carrier frequency to said free RF radio broadcast channel in a transmitting mode of the transceiver.

2. Transceiver according to claim 1, **characterized by** said free RF radio broadcast channel being chosen within a cluster of frequency adjacent RF radio broadcast channels carrying no RF signal exceeding said predetermined threshold level having at least one lower and one higher frequency adjacent channel within said cluster.

3. Transceiver according to claim 2, **characterized in that** detected RF radio broadcast channels having at least one lower and one higher frequency adjacent channel within a plurality of clusters are mutually compared with respect to their RF signal strengths, said free channel being chosen to correspond to an RF radio broadcast channel having minimum RF signal strength.

4. Transceiver according to claim 1 or 2, **characterized in that** said free RF radio broadcast channel is chosen to correspond to an RF radio broadcast channel having minimum RF signal strength.

5. Transceiver according to one of claims 1 to 4, **characterized by** means for converting said tuning data into an optical tuning signal as well as display means to display said optical tuning signal.

6. Transceiver according to one of claims I to 5, **characterized by** said low power RF radio broadcast transmitter comprising a digital modulator to modulate an auxiliary data carrier within said baseband modulation signal with a digital program service name indicating the transmission of a personal broadcast program.

7. Transceiver according to one of claims 1 to 6, **characterized by** a continuous update and storage of tuning data ofN free channels within said RF radio broadcast band as well as means to convert said tuning data in a tuning data list comprising N alternative frequencies indicative for said N free channels..

8. Transceiver according to one of claims 1 to 7, **characterized in that** said baseband modulation signal comprises a free channel identifying tone signal occurring within said baseband modulation signal for a limited period following a selection of a free RF radio broadcast channel.
